(19) Europäisches Patentamt
European Patent Office
Office européen des brevets

(11) **EP 4 173 915 A1**

(12) **EUROPEAN PATENT APPLICATION**

(43) Date of publication:
**03.05.2023   Bulletin 2023/18**

(21) Application number: **22202261.8**

(22) Date of filing: **18.10.2022**

(51) International Patent Classification (IPC):
**B60W 30/16** (2020.01)    **B60W 30/095** (2012.01)
**B60W 60/00** (2020.01)    **B60W 30/18** (2012.01)
**B60W 50/00** (2006.01)

(52) Cooperative Patent Classification (CPC):
**B60W 30/162; B60W 30/0956; B60W 30/16;**
**B60W 30/18163; B60W 60/00274;**
B60W 2050/0013; B60W 2300/12; B60W 2520/10;
B60W 2554/4045; B60W 2554/802; B60W 2555/60;
B60W 2720/103; B60W 2754/30

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.10.2021   US 202163263077 P**

(71) Applicant: **Tusimple, Inc.**
**San Diego, CA 92122 (US)**

(72) Inventors:
• **WANG, Lei**
**San Diego, 92122 (US)**
• **SHAO, Tainqu**
**San Diego, 92122 (US)**
• **WU, Yujia**
**San Diego, 92122 (US)**

(74) Representative: **Black, Diego**
**Withers & Rogers LLP**
**2 London Bridge**
**London SE1 9RA (GB)**

(54) **SYSTEMS AND METHODS FOR HANDLING CUT-IN TRAFFIC FOR AUTONOMOUS DRIVING**

(57)    A method of operating a vehicle, comprises determining, by a computer located in a first vehicle, that an initial distance between the first vehicle and a second vehicle is less than a first distance or a second distance, where the second vehicle is located in a same lane as and in front of the first vehicle; generating, in response to the determining, a sequence of position values and velocity values for the first vehicle, wherein each of the position values and each of the velocity values are associated with a time value; and causing the first vehicle to increase a distance between the first vehicle and the second vehicle by causing the first vehicle to move or operate according to the sequence of position values and velocity values.

FIG. 1

**Description**

CROSS-REFERENCE TO RELATED APPLICATIONS

This patent document claims the priority to and the benefits of U. S. Provisional Application No 63/263,077, filed on October 26, 2021. The entire disclosure of the aforementioned application is hereby incorporated by reference in its entirety.

TECHNICAL FIELD

This document relates to autonomous driving systems. In particular, described herein are systems and methods for handling cut-in traffic encountered by an autonomous vehicle.

BACKGROUND

Self-driving or autonomous vehicles can be autonomously controlled to navigate along a path to a destination. Autonomous driving generally requires sensors and processing systems that perceive the environment surrounding an autonomous vehicle and make decisions based on that perception that ensure safe and reliable operation of the autonomous vehicle. For example, the sensors of the autonomous vehicle can include video cameras and/or light detection and ranging (LiDAR) sensors. LiDARs use light pulses to measure distances to various objects surrounding the autonomous vehicle.

SUMMARY

Systems and methods described herein include, among other features, allowing an autonomous vehicle to safely and smoothly control its distance from a vehicle that comes (e.g., in front of the autonomous vehicle) into the lane of travel of the autonomous vehicle from another lane.

An example aspect of the disclosed embodiments relates to a method of generating a trajectory of an autonomous vehicle that includes determining, by a controller of the autonomous vehicle, whether a condition related to another vehicle has occurred. The method further includes changing a path planning algorithm used by the autonomous vehicle from a first algorithm to a second algorithm which is different from the first algorithm in response to determining that the condition has occurred. The method also includes changing the path planning algorithm from the second algorithm to a third algorithm in response to determining that the condition is no longer present.

Another example aspect of the disclosed embodiments relates to an apparatus comprised in a first vehicle, wherein the apparatus includes at least one processor. The apparatus also includes at least one memory including computer program instructions which, when executed by the at least one processor, cause the apparatus to at least: determine whether a condition exists related to a second vehicle; change a path planning algorithm from a first algorithm to a second algorithm which is different from the first algorithm in response to the determination that the condition exists; and change the path planning algorithm from the second algorithm to a third algorithm in response to a determination that the condition no longer exists.

Yet another example aspect of the disclosed embodiments relates to a method that includes determining, by a controller of a first vehicle, whether a condition exists related to a second vehicle. The method further includes changing a path planning algorithm used by the controller of the first vehicle from a first algorithm to a second algorithm which is different from the first algorithm in response to determining that the condition exists. The method also includes changing the path planning algorithm from the second algorithm to a third algorithm in response to determining that the condition no longer exists.

Yet another example aspect of the disclosed embodiments relates to a method of operating a vehicle, comprising determining, by a computer located in a first vehicle, that an initial distance between the first vehicle and a second vehicle is less than a first distance or a second distance, wherein the second vehicle is located in a same lane as and in front of the first vehicle; generating, in response to the determining, a sequence of position values and velocity values for the first vehicle, wherein each of the position values and each of the velocity values are associated with a time value; and causing the first vehicle to increase a distance between the first vehicle and the second vehicle by causing the first vehicle to move or operate according to the sequence of position values and velocity values.

The above and other aspects and features of the present disclosure are described in greater detail in the drawings, the description and the claims.

BRIEF DESCRIPTION OF THE DRAWINGS

FIG. 1 illustrates a schematic diagram of a system including an autonomous vehicle according to the present disclosure.

FIG. 2 illustrates an example dependence of a hard speed limit on a length along a vehicle path, according to the present disclosure.

FIG. 3 illustrates a soft speed limit profile according to the present disclosure.

FIG. 4 shows an example vehicle following scenario for an autonomous vehicle according to the present disclosure.

FIG. 5 shows examples of an autonomous vehicle trajectory control in response to different cut-in scenarios according to the present disclosure.

FIG. 6 shows an example flowchart of operating a vehicle.

DETAILED DESCRIPTION

Autonomous driving systems (also referred to as autonomous driving vehicles, autonomous vehicles, or self-driving vehicles) should safely and reliably accommodate all types of traffic situations that they can encounter on various roads and in different driving conditions and environments.

During highway cut-in scenarios, e.g., when another vehicle transitions in front of an autonomous vehicle into a lane in which the autonomous vehicle is traveling, generating a smooth behavior of the autonomous vehicle while maintaining enough safety margin between the autonomous vehicle and other nearby vehicles is a challenging problem. There is a need to develop methods and systems that can handle cut-in traffic in an effective and safe manner.

An autonomous vehicle can use its sensors including, for example, accelerometers, gyroscopes, inertial measurement units (IMUs; an IMU can typically include several accelerometers and/or gyroscopes), LiDAR sensors, video cameras, radar (radio detection and ranging) sensors, wind speed sensors, and temperature sensors to determine and/or monitor its own state as well as the states and/or behaviors of other vehicles around it. The other vehicles may be autonomous and/or manually operated. The state of a vehicle can include, e.g., its position relative to that of the autonomous vehicle in, e.g., a two-dimensional (2D) or three-dimensional (3D) coordinate system, its speed (a scalar value) or velocity (a vector), e.g., relative to the autonomous vehicle, and/or its acceleration (e.g., relative to the autonomous vehicle). A vehicle behavior can include, e.g., characteristics of the vehicle's path (e.g., whether the path of the vehicle goes through multiple traffic lanes), as well as characteristics of the vehicle progression along the path (e.g., how aggressively the vehicle changes lanes; how often the vehicle performs (sharp) accelerations and/or decelerations (braking); etc.). Based on the states and behaviors of other vehicles determined using data provided by the autonomous vehicle sensors, the autonomous vehicle can decide whether and how it can proceed along a planned path. For example, the autonomous vehicle can determine a maximum speed it can maintain on a current stretch of a road (e.g., within the speed limit set for the road), the kinds of maneuvers it can safely perform and how fast it can perform those maneuvers while traveling within that stretch. Based on its analysis of the sensor data, the autonomous vehicle can also make corrections to the planned path, if necessary. Among other benefits, technology disclosed in this patent document can improve reliability and safety of the autonomous vehicle's operation.

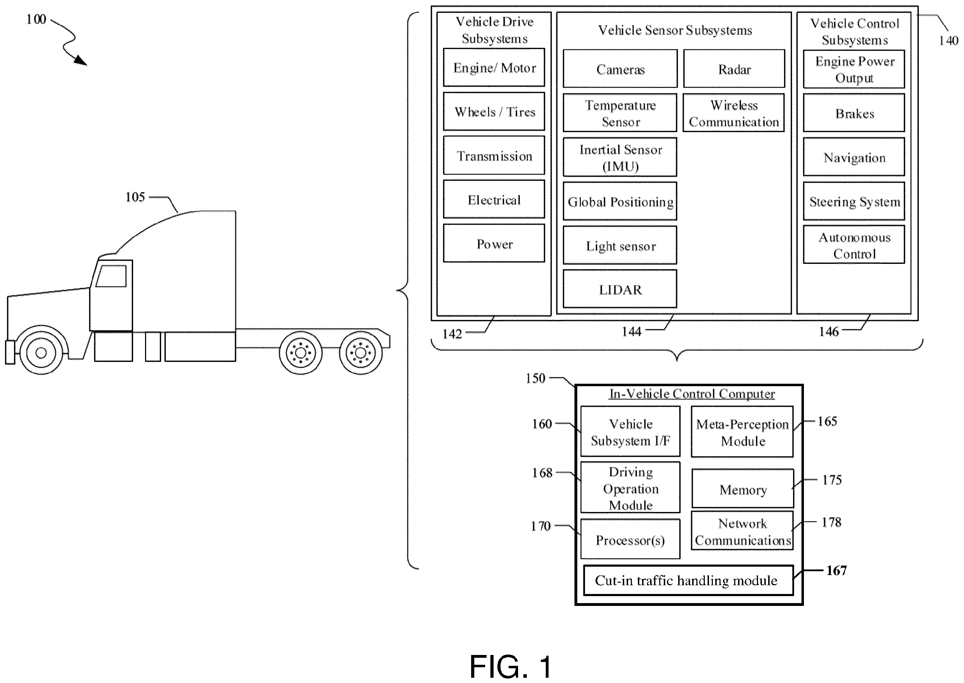

FIG. 1 shows a system 100 that includes a tractor 105 of an autonomous truck. The tractor 105 may include a plurality of vehicle subsystems 140 and an in-vehicle control computer 150. The plurality of vehicle subsystems 140 can include, for example, vehicle drive subsystems 142, vehicle sensor subsystems 144, and vehicle control subsystems 146. An engine or motor, wheels and tires, a transmission, an electrical subsystem, and a power subsystem may be included in the vehicle drive subsystems 142. The engine of the autonomous truck may be an internal combustion engine, a fuel-cell powered electric engine, a battery powered electric engine, a hybrid engine, or another type of engine capable of moving the wheels on which the tractor 105 (also referred to as vehicle 105 or truck 105) moves. The tractor 105 can have multiple motors or actuators to drive its wheels. For example, the vehicle drive subsystems 142 can include two or more electrically driven motors. The transmission of the vehicle 105 may include a continuous variable transmission or a set number of gears that translate power created by the engine of the vehicle 105 into a force that drives the wheels of the vehicle 105. The vehicle drive subsystems 142 may include an electrical system that monitors and controls the distribution of electrical current to components within the vehicle drive subsystems 142 (and/or within the vehicle subsystems 140), including pumps, fans, and actuators. The power subsystem of the vehicle drive subsystems 142 may include components that regulate the power source of the vehicle 105.

Vehicle sensor subsystems 144 can include sensors for general operation of the autonomous truck 105. The sensors for general operation of the autonomous vehicle may include, for example, one or more cameras, a temperature sensor, an inertial sensor, a global positioning system (GPS), a light sensor, a LiDAR system, a radar system, and/or a wireless communications system.

The vehicle control subsystems 146 may be configured to control operation of the autonomous vehicle, or truck, 105 as a whole and operation of its various components. Accordingly, the vehicle control subsystems 146 may include various elements including, e.g., an engine power output subsystem, a brake unit, a navigation unit, a steering system, and an autonomous control unit. The engine power output subsystem may control the operation of the engine, including, e.g., the torque produced, or horsepower provided, as well as provide control of the gear selection of the transmission. The brake unit can include any combination of mechanisms configured to decelerate the autonomous vehicle 105. The brake unit can use friction to slow the wheels in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically based on, e.g., traffic or road conditions, while the autonomous vehicle 105 is in operation. In some embodiments, the navigation unit may be configured to incorporate data from a GPS device and one or more predetermined maps so as to determine the driving path for the autonomous vehicle 105. The steering system may represent any combination of mechanisms that may be operable to adjust the heading of the autonomous vehicle 105 in an autonomous mode or in a driver-controlled mode.

The autonomous control unit may include a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the radar, the LiDAR, the cameras, and/or other vehicle sensors and subsystems to determine the driving path or trajectory for the autonomous vehicle 105.

An in-vehicle control computer 150, which may be referred to as a vehicle control unit or VCU, can include, for example, any of: a vehicle subsystem interface 160, a driving operation module 168, one or more processors 170, a meta-perception module 165, a memory 175, a cut-in traffic handling module 167, or a network communications subsystem 178. This in-vehicle control computer 150 controls many, if not all, of the operations of the autonomous truck 105 in response to information from the various vehicle subsystems 140.

The one or more processors 170 can be configured to execute operations associated with the meta-perception module 165 which, for example, allow the vehicle 105 to determine confidence in perception data indicating, e.g., a hazard, determine a confidence level of a regional map, or analyze behaviors of agents of interest (also referred to as targets) surrounding the autonomous vehicle 105. An agent of interest or a target may refer to, among other things: another vehicle, a vehicle following the autonomous vehicle 105, a vehicle in a vicinity of the autonomous vehicle 105, a pedestrian, a construction zone, or a vehicle proximate to the autonomous vehicle 105. Data from the vehicle sensor subsystems 144 may be provided to the meta-perception module 165 so that the course of action for the autonomous vehicle 105 may be appropriately determined. Alternatively, or additionally, the meta-perception module 165 may determine the course of action in conjunction with another operational or control module, such as, e.g., the driving operation module 168 or the cut-in traffic handling module 167. Data from the vehicle sensor subsystems 144 may be also provided to the cut-in traffic handling module 167, for example. According to some example embodiments, the cut-in traffic handling module 167 can be configured to determine, based on, e.g., the data received by it from the vehicle sensor subsystems 144, whether an initial distance between the autonomous vehicle and a vehicle in front of the autonomous vehicle is less than any of: a safety distance or a reference distance, wherein the safety distance is less than the reference distance. The cut-in traffic handling module 167 can be further configured to generate a sequence of time-dependent position and velocity values for the autonomous vehicle in response to determining that the initial distance is less than at least one of: the safety distance or the reference distance. According to some example embodiments, the cut-in traffic handling module 167 can be also configured to communicate and/or interact with other systems of the autonomous vehicle including, e.g., the driving operation module 168 in order to control the autonomous vehicle to move according to the sequence of time-dependent position and velocity values such that the autonomous vehicle increases its distance from the front vehicle.

The memory 175 may include instructions to transmit data to, receive data from, interact with, or control one or more of the vehicle drive subsystems 142, vehicle sensor subsystems 144, or vehicle control subsystems 146. The in-vehicle control computer (VCU) 150 may control the function of the autonomous vehicle 105 based on inputs received from various vehicle subsystems (e.g., the vehicle drive subsystems 142, the vehicle sensor subsystems 144, and the vehicle control subsystems 146). The VCU 150 may, for example, send information to the vehicle control subsystems 146 to direct or control functions including, e.g., the trajectory, velocity, and signaling behaviors of the autonomous vehicle 105. The vehicle control subsystems 146 may receive a course of action to be taken from one or more modules of the VCU 150 and may, in turn, relay instructions to other subsystems to execute the course of action.

In an example autonomous driving car-following scenario, an autonomous vehicle (e.g., an autonomous truck) may attempt to maintain a safety distance between itself and a first vehicle traveling in front of it in, e.g., the same traffic lane. The first vehicle in front of the autonomous vehicle may be referred to as a front vehicle. In some situations, a second vehicle may abruptly change lanes or cut in between the autonomous vehicle and the front vehicle. When the second vehicle changes lanes, a distance between the autonomous vehicle and the second vehicle may be less than the safety distance. Such a vehicle maneuver may be referred to as "cutting-in" in front of the autonomous vehicle and, as such, the second vehicle may be referred to as a cut-in vehicle. In some examples, the autonomous vehicle may perform a sudden, or sharp, deceleration ("brakes hard") to avoid a collision with the cut-in vehicle and/or to recover the safety distance. A sharp deceleration may cause a disturbance to the autonomous vehicle dynamics. A sharp deceleration may also lead to safety issues including, e.g., if a third vehicle behind the autonomous vehicle is following at a short distance. If the third vehicle is too close and the deceleration is too sharp, the third vehicle may collide with the rear of the autonomous vehicle. As such, the third vehicle can collide with the autonomous vehicle if the autonomous vehicle performs a sharp deceleration in response to the cut-in maneuver by the cut-in vehicle. A sharp deceleration by the autonomous vehicle can also cause discomfort to the passengers on board the autonomous vehicle. A sharp deceleration by the autonomous vehicle may also cause a load to shift within autonomous vehicle, causing damage to items or products being carried by the autonomous vehicle.

According to some example embodiments, a system and method is provided to produce a smooth behavior and trajectories of the autonomous vehicle in such cut-in scenarios while ensuring autonomous vehicle safety. In some example embodiments, both a distance and a relative velocity between the autonomous vehicle and the cut-in vehicle are used to determine (and/or recover) a safety margin or safety distance between vehicles. According to some example embodiments, the autonomous vehicle uses optimization and control algorithms to recover the safety margin while maintaining smoothness of its path or trajectory.

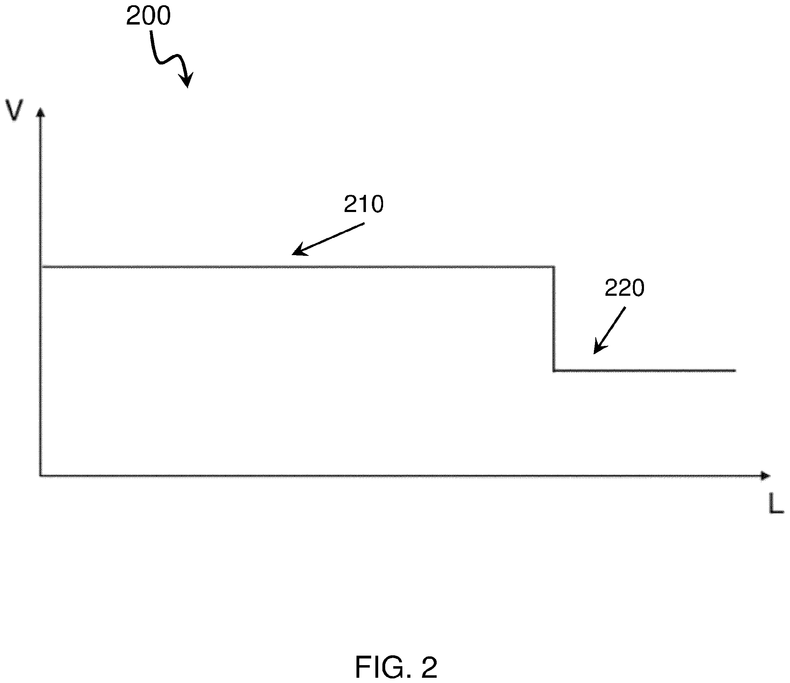

According to some examples, a hard speed limit may refer to a speed limit that should not be exceeded by an autonomous vehicle. FIG. 2 illustrates an example dependence of a hard speed limit V on a path length L along a trajectory of the autonomous vehicle (e.g., when the autonomous vehicle is traveling along a road). As FIG. 2 shows, the hard speed limit 210 for an initial part of the autonomous vehicle path is greater than the hard speed limit 220 for the subsequent part of the autonomous vehicle path. As FIG. 2 further illustrates, there is a sharp transition between the values of the hard speed limit for the two parts of the vehicle path. That transition can occur, for example, at the location of a speed limit sign.

A soft speed limit, according to some implementations of the present disclosure, may refer to a dependence of a speed limit on a distance along a path (e.g., a road), wherein, for example, the speed limit is a combination (e.g., a linear one) of speed limits set by law or regulations for the path and/or other speed limits. For example, drivers may be required to slow their vehicles down to less than 10 miles per hour under the speed limit when passing a stopped emergency vehicle such as a police car or an ambulance. In some implementations, a soft speed limit is a speed value between two speed limits which are set by, e.g., law or regulations for different parts of a road (the soft speed limit can include the values of the two speed limits). For example, a soft speed limit of 42 mph can be set by the autonomous vehicle for itself in a certain part of a transition area at an end of a road stretch having a 45 mph speed limit which is followed by another part of the road having a speed limit of, e.g., 35 mph.

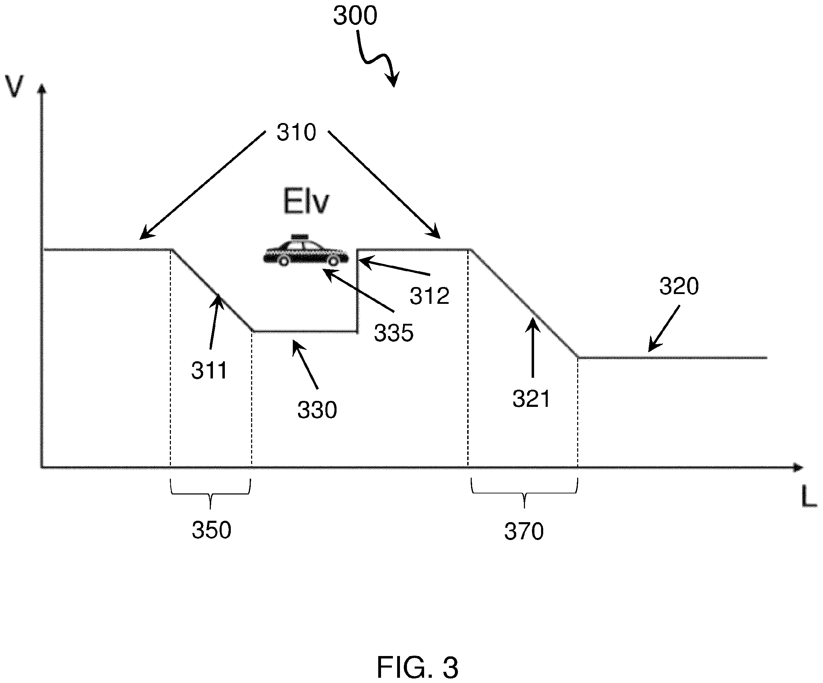

FIG. 3 illustrates a soft speed limit profile 300 which an autonomous vehicle can generate or obtain and set for itself to follow when it moves along a road having a first speed limit 310 along a first part of the road (e.g., the first speed limit is indicated by a speed limit sign placed at the beginning of the first part of the road) followed by a second part of the road having a different speed limit 320. A third speed limit 330 is set by, e.g., regulations for vehicles passing a police vehicle 335 stopped on a shoulder of the first part of the road. The soft speed limit profile 300 of FIG. 3 depicts a speed limit transition 311 between the first speed limit 310 and the third speed limit 330, a second a speed limit transition 312 between the third speed limit 330 and the first speed limit 310, and a third speed limit transition 321 between the first speed limit 310 and the second speed limit 320.

Within the speed limit transition 311, the maximum allowed speed of the autonomous vehicle decreases its value from the value of the speed limit 310 to the value of the speed limit 330 in, e.g., a linear fashion along a stretch 350 of the road. Such a gradual decrease of the soft speed limit value helps the autonomous vehicle to smoothly adjust is speed from, e.g., the value of the speed limit 310 to the value of the speed limit 330 such that the autonomous vehicle complies with the speed limit 330 in the area around the police car 335. In the speed limit transition 312, because the speed limit value 310 is higher than the speed limit value 330, there is no need to provide a gradual speed limit change profile along a part of the road. The speed limit that the autonomous vehicle should obey can change its value from the value of the speed limit 330 to the value of the speed limit 310 at once (e.g., instantaneously when the autonomous vehicle leaves the area around the police car 335 and reaches the part of the road having the speed limit 310). The speed limit transition 321 is similar to the speed limit transition 311 in that the value of the soft speed limit the autonomous vehicle should follow changes gradually along a stretch 370 of the road between the values of the speed limits 310 and 320.

To construct a soft speed limit profile given speed limit points along a road or a path of the autonomous vehicle, the in-vehicle control computer may reverse iterate through the speed limit points in the manner described below, for example. A speed limit point is a point of the road or the path of the autonomous vehicle which has a speed limit value associated with it by, e.g., laws or regulations. A soft speed limit profile according to implementations of the present disclosure can be, for example, an L-V graph or plot including, e.g., the one shown in FIG. 3, or, generally, a dependence of vehicle's velocity V on length or distance L along a path of the vehicle. The length or the distance can be measured, for example, from a certain starting point on the path. Given a set or an array of speed limit points that includes several speed limit points, the following procedure can be followed in order to obtain an L-V dependence according to the present disclosure. If the speed limit value at a previous speed limit point is higher than the speed limit value at a current speed limit point, then in-vehicle control computer may determine a point or position where the autonomous vehicle should start to decelerate with, e.g., a given deceleration in order to decrease its speed such that, when the autonomous vehicle reaches the current speed limit point, its speed is at or below the speed limit value at the current speed limit point. The determined point or position to start decelerating can be indicated, e.g., on the L axis of an L-V plot. If the determined position is between the current speed limit point and the previous speed limit point, then, according to some example embodiments, the determined position may be added to the L-V plot (e.g., as a point having coordinates of the determined position (along the L axis) and a speed value (along the V axis) equal to that of the previous speed limit point). In some example embodiments, if the determined position is between the current speed limit point and the previous speed limit point, a point may be added to the set or the array of the speed limit points, the point having coordinates of the determined position and a speed value equal to that of the previous speed limit point. Otherwise, if the determined position is beyond the part of the vehicle's path between the current and the previous speed limit points, the speed limit value at the previous speed limit point may be adjusted or changed to satisfy the condition that the autonomous vehicle having speed equal to the adjusted speed limit value at the previous speed limit point and moving, e.g., with a given deceleration reaches the current speed limit point having a speed equal to the speed limit value at the current speed limit point. If the speed limit at the previous speed limit point is lower than the speed limit at the current speed limit point, then, in some example embodiments, the in-vehicle control computer may add the current speed limit point to the L-V plot. According to some example embodiments, in order to compute the soft speed limit at a given position xi, the in-vehicle control computer may need to find the last speed limit point whose position $x_j$ is less than the given position $x_i$, and the in-vehicle control

$$v_i = \sqrt{v_j^2 + 2a_j(x_i - x_j)}$$

computer can compute $v_i$ according to, e.g., the following formula:                      .

A safety distance or margin, according to some implementations of the present disclosure, is the minimum distance between the autonomous vehicle and a vehicle in front of the autonomous vehicle which travels, e.g., in the same traffic lane (or along the same path) as the autonomous vehicle. The in-vehicle control computer may attempt to continuously maintain the safety distance under all traffic conditions. If a cut-in vehicle reduces the safety distance, the in-vehicle control computer may adjust the outputs to the vehicle control subsystems to recover the safety distance between itself and the cut-in vehicle over a time interval.

According to some example embodiments, the value of safety distance can be computed according to the

$$d_{safe} = max\left\{\frac{v_{ego}^2}{2a_{ego}^{max}} - \frac{v_{front}^2}{2a_{front}^{max}}, d\right\}$$

following formula:                      , wherein the $d_{safe}$ is the safety distance, $v_{ego}$ is the (current) speed of the autonomous vehicle, $v_{front}$ is the (current) speed of the vehicle in front of the autonomous vehicle (referred to as the front vehicle), $a_{ego}^{max}$ is the maximum acceleration that the autonomous vehicle can achieve (e.g., the maximum deceleration that the autonomous vehicle can achieve during braking in response to activation of its braking system(s) or mechanism(s)), $a_{front}^{max}$ is the maximum acceleration that the front vehicle can achieve (e.g., the maximum deceleration that the front vehicle can achieve during braking in response to activation of its braking mechanism(s)). $\frac{v_{ego}^2}{2a_{ego}^{max}}$ is the distance that the autonomous vehicle will travel until it stops when it starts at the speed $v_{ego}$ and decelerates with the deceleration $a_{ego}^{max}$. Similarly, $\frac{v_{front}^2}{2a_{front}^{max}}$ is the distance that the front vehicle will travel until it stops when it starts at the speed $v_{frant}$ and decelerates with the deceleration $a_{front}^{max}$. According to some example embodiments,

$$a_{ego}^{max} = 4 \ (\text{m/s}^2), a_{front}^{max} = 6 \ (\text{m/s}^2)$$, and $d$ = 15 (m).

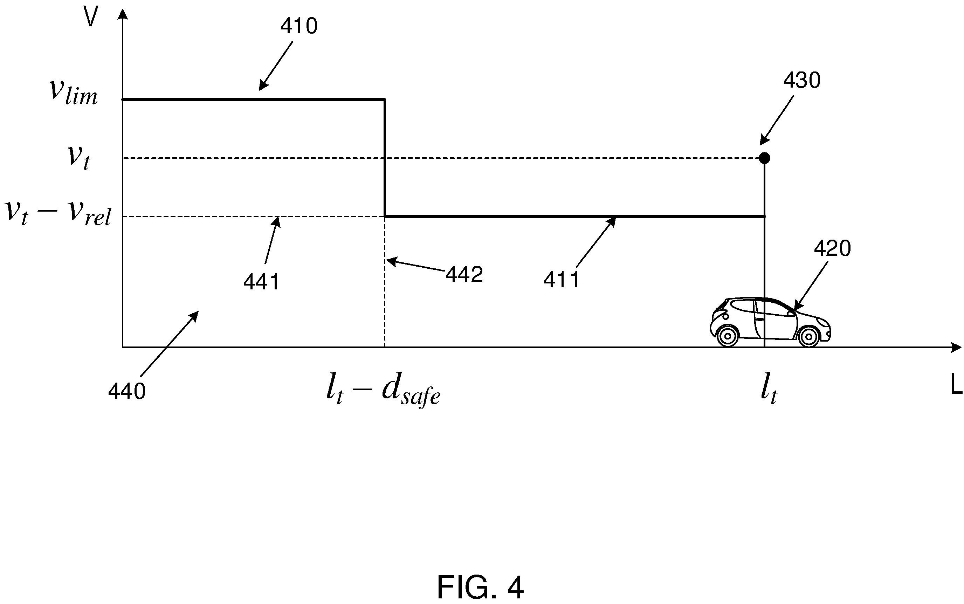

In some example embodiments, in order to avoid sudden changes in the autonomous vehicle behavior, the safety distance control and/or recovery can be performed by the autonomous vehicle using a velocity profile (represented, e.g., by an L-V dependence, plot, or graph) as a velocity constraint. FIG. 4 shows an example relationship between a speed limit set for, e.g., a road and a distance along the road. Speed limit profile 410 shown in FIG. 4 represents a dependence of the speed limit $v_{lim}$ on the distance L along the road. L=0 on the plot in FIG. 4 corresponds to, e.g., a certain place or point on the road. FIG. 4 further illustrates that, for the moment in time t, a vehicle 420 which is in front of the autonomous vehicle (the vehicle 420 may be referred to as the front vehicle) is characterized by the point 430 on the L-V plot having coordinates $l_t$ along the L-axis and $v_t$ along the V-axis of the plot. FIG. 4 further shows that the area 440 of the L-V plot which is limited by the V and L axes and lines 441 and 442 corresponds to the velocities and positions of the road that the autonomous vehicle can have such that it does not exceed the speed limit 411 and also keeps at the safety distance from the front vehicle 420 at the moment in time t. The value of the speed limit 411 ($v_{lim411}$) and the speed of the vehicle 420 at the time t ($v_t$) determine a relative speed ($v_{rel}$) between the front vehicle and the autonomous vehicle at the time t when the autonomous vehicle is moving at the speed $v_{lim411}$: $v_{rel} = v_t - v_{lim411}$.

According to some example embodiments, the autonomous vehicle can recover the safety distance $d_{safe}$ between itself and a front vehicle in such a way that the front vehicle has a speed $v_{rel}$ relative to the autonomous vehicle during the distance recovery process. In certain example embodiments, the value of $v_{rel}$ is about 2m/s. In some example embodiments, duration of the safety distance recovery process T can be determined or estimated using values of the safety distance $d_{safe}$, position of the autonomous vehicle on the road (or along a path) $l_{ego}$, position of the front vehicle on the road (or along the path) $l_{front}$, and the value of the relative speed between the front vehicle and the autonomous one $v_{rel}$ according to, e.g., the following formula: $T = \dfrac{d_{safe} - (l_{front} - l_{ego})}{v_{rel}}$.

According to some example embodiments, the in-vehicle control computer can represent the current state of the autonomous vehicle as a vector $x_0 = [l_0, v_0]^T$, the final state of the autonomous vehicle at the end of the safety distance recovery process as another vector $x_T = [l_{front}(T) - d_{safe}, \cdot]^T$. Components of the vector $x = [l, v]^T$ corresponding to a state of the autonomous vehicle can be scalars or vectors. For example, l can be a scalar or a 2D or 3D vector of coordinates. Similarly, v can be a scalar equal to the speed of the autonomous vehicle or a 2D or 3D vector of velocity components of the autonomous vehicle. In some example embodiments, $d_{safe}$ is set or determined based on the speed (or velocity) of the autonomous vehicle and/or the speed (or velocity) of the front vehicle. In some example embodiments, $d_{safe}$ may be constant during each trajectory planning performed by the autonomous vehicle.

According to some example embodiments, the safety distance recovery process may be accomplished before a terminal time T (if the time at the beginning of the process is 0, then one can also say that the total duration of the safety distance recovery process may be less than T). According to certain example embodiments, the final state $x_T$ of the autonomous vehicle at the end of the safety distance recovery process should satisfy the following conditions: $x_T \in$

$$S_f = \{x = [l, \ v] \in \mathbb{R}^2 : l - (l_{\text{front}}(T) - d_{\text{safe}}) = 0\}.$$

The in-vehicle control computer can find a trajectory x of the autonomous vehicle for the time interval $[0, T]$ $(x : [0, T] \to \mathbb{R}^2)$. To provide a smooth trajectory of the autonomous vehicle, the in-vehicle control computer can require, according to certain example embodiments, that a measure related to acceleration of the autonomous vehicle on the trajectory reaches a minimum value. Specifically, the in-vehicle control computer can require a minimum value of $\|a\|_2^2$ for the autonomous vehicle's trajectory, wherein $a$ is an acceleration of the autonomous vehicle (which can be a scalar or a vector, for example). In some example embodiments, $\|a\|_2^2 = \int_0^T a(t)^2 dt$. According to certain example embodiments, the task of finding a trajectory x of the autonomous vehicle can be presented as the following optimization problem:

$$\underset{a}{inf} \, \|a\|_2^2 = \int_0^T a(t)^2 dt, \text{ such that } x(0) = x_0, \, x(T) \in S_f, \text{ and } \dot{x}(t) = \begin{bmatrix} v(t) \\ a(t) \end{bmatrix} \quad (1).$$

Solving this optimization problem gives:

$$a^*(t) = c_1 t + c_0,$$

$$v^*(t) = \frac{c_1}{2}t^2 + c_0 t + v_0,$$

$$l^*(t) = \frac{c_1}{6}t^3 + \frac{c_0}{2}t^2 + v_0 t + l_0,$$

wherein

$$c_0 = -\frac{3(l_0 + v_0 T - (l_{front}(T) - d_{safe}))}{T^2},$$

and

$$c_1 = \frac{3(l_0 + v_0 T - (l_{front}(T) - d_{safe}))}{T^3}.$$

Example embodiments can use either $v^*(t)$ or $a^*(t)$ as a constraint for quadratic programming-based procedures of the autonomous vehicle control.

According to some implementations, a reference distance corresponds to a steady state distance for following another vehicle. In some example embodiments, the reference distance may be a profile or dependence of a distance between the autonomous vehicle and the front vehicle on time t which the autonomous vehicle should follow. A reference distance may be paired with a reference speed. In some example embodiments, the reference speed of the autonomous vehicle may be a dependence of speed of the autonomous vehicle (e.g., relative to the front vehicle) on time t which the autonomous vehicle may follow. A pair of a reference distance and related reference speed values is referred to as a reference state. The reference state of an autonomous vehicle can be violated by the autonomous vehicle on purpose during, e.g., a transition process or maneuver such as, for example, a lane change by the autonomous vehicle, a takeover maneuver performed by the autonomous vehicle, a traffic merging performed by the autonomous vehicle, or responding to a cut-in vehicle maneuver by the autonomous vehicle.

According to some example embodiments, the reference distance ($d_{ref}$) may be determined according to a linear dependence on the speed (or velocity) of the autonomous vehicle: $d_{ref} = d_{static} + T_{headway}v_{ego}$. In the linear relationship above, $d_{static}$ is a distance between the autonomous vehicle and the vehicle in front of it (with respect to which the autonomous vehicle should maintain its distance), that may not depend on the speed of the autonomous vehicle. $T_{headway}v_{ego}$ is the part of the $d_{ref}$ which linearly depends on the speed $v_{ego}$ of the autonomous vehicle. According to some example embodiments, $v_{ego}$ may include an average speed that the autonomous vehicle is trying to maintain or a value of a speed limit. In some example embodiments, the values of the constants $d_{static}$ and $T_{headway}$ may be: $d_{static} = 15$ m, and $T_{headway} = 3$ s.

Similar to the process of recovering the safety distance described above, the autonomous vehicle can solve the optimization problem described by, e.g., the equations (1) to recover a reference distance, e.g., after a cut-in vehicle maneuver. According to some example embodiments, the autonomous vehicle may recover the reference distance while maintaining a certain speed (e.g., 0.5 m/s) relative to the vehicle in front of it. In some example embodiments, the autonomous vehicle may attempt to recover the reference distance within a certain time limit.

As mentioned above, a reference distance may be paired with a reference speed, including, e.g., when after a cut-in maneuver, the front vehicle may be within the safety distance, or in the case when the front vehicle is within the reference distance from the autonomous vehicle. In those cases, the reference speed (also referred to as speed reference) can be generated using, e.g., the same method as for the reference distance. When the autonomous vehicle is free cruising or the front vehicle is out of the reference distance range, the in-vehicle control computer can take the minimum value between the speed limit and the front vehicle speed as a speed reference to slowly or gradually converge the speed of the autonomous vehicle to the speed reference, for example. A discontinuous speed of the front vehicle may result in a sudden application of brakes by the autonomous vehicle since the reference speed may not be pre-generated in this case. To avoid such a maneuver, the autonomous vehicle can use information provided by its perception system.

In some cases, the VCU may determine that the actual speed of the autonomous vehicle has deviated from the reference speed. The VCU may assign a tracking weight to the reference speed. The tracking weight may determine how quickly the autonomous vehicle is able to converge to the reference speed. If constraints are present that affect the speed of the autonomous vehicle, the VCU may assign tracking weights to those constraints as well.

The tracking weight for the reference speed may be different for different scenarios such as, for example, accelerating to a speed limit or decelerating for a traffic jam. In some example embodiments, two reference values can be used to achieve this. In certain example embodiments, different weights can be applied to the reference speed directly.

According to some example embodiments, if the distance between the autonomous vehicle and a front vehicle is less than the safety distance, Pontryagin's Maximum Principle (PMP) can be used to generate a sequence of control commands that translate into movements or maneuvers of the autonomous vehicle so that the autonomous vehicle can recover the safety distance. In some example embodiments, the autonomous vehicle can perform the safety distance recovery while maintaining, e.g., some relative speed between itself and the front vehicle. In certain example embodiments, the safety distance recovery may be completed within a certain time period or interval. If, for example, the distance between the autonomous vehicle and the front vehicle is greater than the safety distance, the autonomous vehicle may continue along its path by maintaining a safety distance between the autonomous vehicle and the front vehicle.

In some example embodiments, if there is no front vehicle for the autonomous vehicle to follow, the autonomous vehicle can use, e.g., an artificial speed sequence as a speed reference and can generate a position reference accordingly (e.g., based on the artificial speed sequence). The artificial speed sequence may include, for example, a sequence of speed values vs. time or vs. distance along a road (or, generally, a path) which a front vehicle could follow if it was present and moving in front of the autonomous vehicle.

The VCU may determine a following distance based on various factors, including the safety distance, the reference distance, and the distance between the autonomous vehicle and another vehicle behind autonomous vehicle. If the distance between the autonomous vehicle and a front vehicle is less than the following distance, Pontryagin's Maximum Principle (PMP) can be used to generate a sequence of control commands that translate into movements or maneuvers of the autonomous vehicle (or, generally, the way the autonomous vehicle moves or progresses along its travel path or trajectory) so that the autonomous vehicle can recover the following distance between itself and the front vehicle while, e.g., maintaining a certain (e.g., a predetermined) speed relative to the front vehicle or, for example, while minimizing its acceleration on the recovery trajectory and/or during the time allotted for the distance recovery process. In some example embodiments, the autonomous vehicle should recover the following distance in a certain (e.g., predetermined) amount of time. If there is no front vehicle, or if the front vehicle is beyond the following distance, the position sequence which the autonomous vehicle can transition through is the front vehicle's position sequence minus the following distance, and the VCU can produce a following speed sequence that corresponds to the front vehicle's speed sequence.

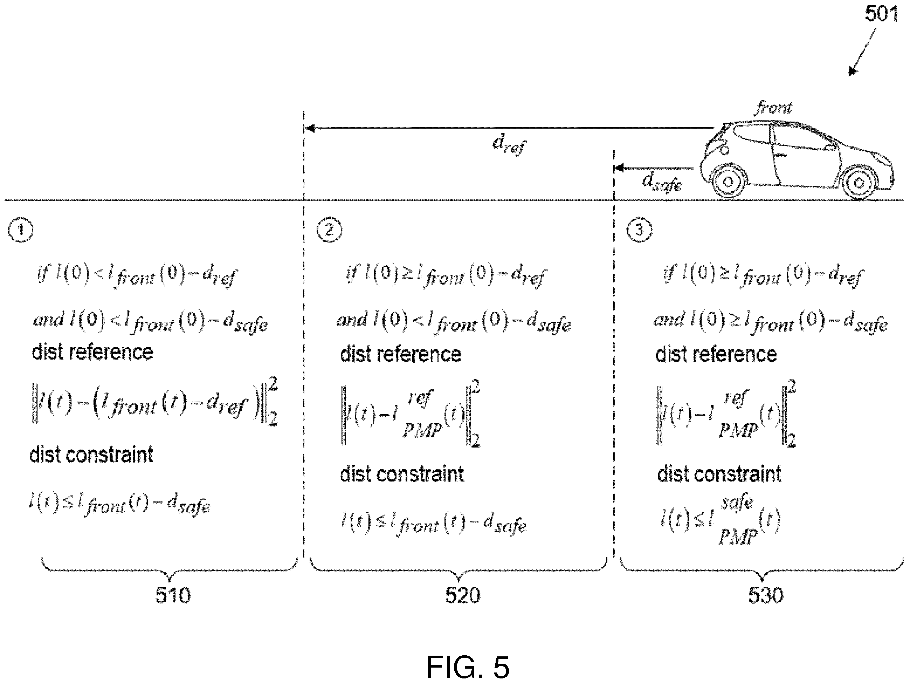

FIG. 5 shows three examples of an autonomous vehicle trajectory control scenarios, according to the present disclosure. In FIG. 5, $l(0)$ is a position of the autonomous vehicle at time t = 0. $l_{front}(0)$ is a position, at time t = 0, of a front vehicle that "cuts-in" in front of the autonomous vehicle (e.g., transitions into the lane of travel of the autonomous vehicle from another lane). The autonomous vehicle may attempt to maintain a minimum safety distance $d_{safe}$ between the autonomous vehicle and the front vehicle. $d_{ref}$ is a reference distance which, according to certain example embodiments, is a function (e.g., a linear one) of the speed or velocity of the autonomous vehicle. $l(t)$ is a position of the autonomous vehicle at time t. $l_{front}(t)$ is a position of the front vehicle at time t. $l_{PMP}^{ref}(t)$ is a position of the autonomous vehicle at time t during the reference distance recovery process computed using Pontryagin's Maximum Principle as applied to the problem of autonomous vehicle control according to some example embodiments.

In the example scenario 510 shown in FIG. 5, the initial distance between the autonomous vehicle and the front vehicle 501 is larger than both $d_{safe}$ and $d_{ref}$. According to the scenario 510, the autonomous vehicle's trajectory may be generated using the following distance constraint: $l(t) \leq l_{front}(t) - d_{safe}$. Also, in the scenario 510, the following norm may be used during the autonomous vehicle trajectory control or optimization process:

$$\left\| l(t) - (l_{front}(t) - d_{ref}) \right\|_2^2 .$$

In the example scenario 520 shown in FIG. 5, the initial distance between the autonomous vehicle and the front vehicle 501 is larger than $d_{safe}$ but less than $d_{ref}$. According to the scenario 520, the autonomous vehicle trajectory may be generated using the following distance constraint: $l(t) \leq l_{front}(t) - d_{safe}$. Also, in the scenario 520, the following norm may be used to control the trajectory of the autonomous vehicle: $||l(t) - l_{PMP}^{ref}(t)||_2^2$ .

In the example scenario 530 shown in FIG. 5, the initial distance between the autonomous vehicle and the front vehicle 501 is less than both $d_{safe}$ and $d_{ref}$. According to the scenario 530, the autonomous vehicle trajectory may be generated using the following distance constraint: $l(t) \leq l_{PMP}^{safe}(t)$. $l_{PMP}^{safe}(t)$ is a minimum distance between the autonomous vehicle and the front vehicle 501 which the autonomous vehicle may attempt to maintain during the safety distance recovery while following the trajectory computed based on the PMP Also, in the scenario 530, the following norm may be used during the autonomous vehicle trajectory control process: $||l(t) - l_{PMP}^{ref}(t)||_2^2$ .

An aspect of the disclosed embodiments relates to a method of generating a trajectory of an autonomous vehicle, comprising: determining, by a controller of the autonomous vehicle, whether a condition related to another vehicle has occurred; changing a path planning algorithm used by the autonomous vehicle from a first algorithm to a second algorithm which is different from the first algorithm in response to determining that the condition has occurred; and changing the path planning algorithm from the second algorithm to a third algorithm in response to determining that the condition is no longer present.

In some example embodiments of the method of generating a trajectory of an autonomous vehicle, the determining, by the controller of the autonomous vehicle, whether the condition related to another vehicle has occurred comprises: determining, by the controller of the autonomous vehicle, whether an initial distance between the autonomous vehicle and a vehicle in front of the autonomous vehicle is less than any of: a safety distance or a reference distance, wherein the safety distance is less than the reference distance. According to some example embodiments, the method further comprises: generating a sequence of time-dependent position and velocity values for the autonomous vehicle using the second algorithm; and controlling the autonomous vehicle to move based on the sequence of time-dependent position and velocity values. In certain example embodiments, the determining that the condition is no longer present comprises: determining that the autonomous vehicle is beyond the safety distance from the vehicle in front of the autonomous vehicle when the initial distance is less than or equal to the safety distance, or determining that the autonomous vehicle is beyond the reference distance from the vehicle in front of the autonomous vehicle when the initial distance is less than the reference distance and more that the safety distance. In some example embodiments, a duration of the sequence is equal to a predetermined time interval value. In certain example embodiments, the generating the sequence of time-dependent position and velocity values is performed using Pontryagin's Maximum Principle. In some example embodiments, the sequence is such that an integral of the autonomous vehicle acceleration determined using velocity values from the sequence reaches a minimum value. According to certain example embodiments, the generating the sequence of time-dependent position and velocity values is performed using a constraint on a distance between the autonomous vehicle and the another vehicle. In some example embodiments, the constraint includes requiring that the distance between the autonomous vehicle and the another vehicle is more than a pre-determined distance value. According to some example embodiments, the controlling the autonomous vehicle to move according to the sequence of time-dependent position and velocity values includes using a measure of closeness of an actual trajectory of the autonomous vehicle to the sequence of time-dependent position and velocity values. In certain example embodiments, the controlling the autonomous vehicle to move according to the sequence of time-dependent position and velocity values is such that the autonomous vehicle increases its distance from the another vehicle. According to some example embodiments, the method further includes determining whether the condition is still present and using the second path planning algorithm in response to determining that the condition is still present. In some example embodiments, the determining, by the controller of the autonomous vehicle, whether the initial distance between the autonomous vehicle and the vehicle in front of the autonomous vehicle is less than any of: the safety distance or the reference distance comprises using data from one or more sensors of the autonomous vehicle. In certain example embodiments, the one or more sensors of the autonomous vehicle include at least one of: a video camera, or a light detection and ranging (LiDAR) sensor. In some example embodiments, the third algorithm is the same as the first algorithm. According to some example embodiments, the third algorithm is different from the first algorithm.

An aspect of the disclosed embodiments relates to a method, comprising: determining, by a controller of a first vehicle, whether a condition exists related to a second vehicle; changing a path planning algorithm used by the controller of the first vehicle from a first algorithm to a second algorithm which is different from the first algorithm in response to determining that the condition exists; and changing the path planning algorithm from the second algorithm to a third algorithm in response to determining that the condition no longer exists.

In some example embodiments of the method, the determining, by the controller of the first vehicle, whether the condition exists related to the second vehicle comprises: determining, by the controller of the first vehicle, that the second vehicle is in front of the first vehicle; and determining, by the controller of the first vehicle, whether a distance between the first vehicle and the second vehicle is less than a first threshold distance. According to some example embodiments, the method further comprises: generating, based on the second algorithm, a sequence of time dependent position and velocity values for the first vehicle; and controlling, based on the sequence of time dependent position and velocity values, movement of the first vehicle. In certain example embodiments, the determining that the condition no longer exists comprises: determining that a distance between the first vehicle and the second vehicle is greater than or equal to the first threshold distance. In some example embodiments, a duration of the sequence of time dependent position and velocity values is equal to a predetermined time interval value. According to some example embodiments, the sequence of time dependent position and velocity values is generated based on Pontryagin's Maximum Principle. In some example embodiments, for the sequence of time dependent position and velocity values, an integral of an acceleration of the first vehicle is determined using velocity values from the sequence reaches a minimum value. In certain example embodiments, the generating the sequence of time dependent position and velocity values is performed using a constraint on a distance between the first vehicle and the second vehicle. According to some example embodiments, the constraint includes requiring that the distance between the first vehicle and the second vehicle is greater than a second threshold distance. In some example embodiments, the controlling the first vehicle based on the sequence of time dependent position and velocity values comprises calculating a difference between the sequence of time dependent position and velocity values and an actual trajectory of the first vehicle. According to certain example embodiments, the controlling the first vehicle based on the sequence of time dependent position and velocity values is such that the first vehicle increases its distance from the second vehicle. In some example embodiments, the method further comprises: determining that the condition still exists; and using the second path planning algorithm in response to determining that the condition still exists. According to some example embodiments, the determining, by the controller of the first vehicle, whether the distance between the first vehicle and the second vehicle is less than the first threshold distance is based on data from one or more sensors of the first vehicle. In certain example embodiments, the one or more sensors of the first vehicle include at least one of: a camera, a light detection and ranging sensor, and a radar. In some example embodiments, the third algorithm is the same as the first algorithm. According to some example embodiments, the third algorithm is different from the first algorithm.

Yet another aspect of the disclosed embodiments relates to an apparatus comprised in a first vehicle, the apparatus comprising: at least one processor; and at least one memory including computer program instructions which, when executed by the at least one processor, cause the apparatus to at least: determine whether a condition exists related to a second vehicle; change a path planning algorithm from a first algorithm to a second algorithm which is different from the first algorithm in response to a determination that the condition exists; and change the path planning algorithm from the second algorithm to a third algorithm in response to a determination that the condition no longer exists.

In some example embodiments of the apparatus, to determine whether the condition exists related to the second vehicle, the at least one memory further includes computer program instructions which, when executed by the at least one processor, cause the apparatus to at least: determine that the second vehicle is in front of the first vehicle; and determine whether a distance between the first vehicle and the second vehicle is less than a first threshold distance. According to some example embodiments, the at least one memory further includes computer program instructions which, when executed by the at least one processor, cause the apparatus to at least: generate, based on the second algorithm, a sequence of time dependent position and velocity values for the first vehicle; and control, based on the sequence of time dependent position and velocity values, movement of the first vehicle. In some example embodiments, to determine that the condition no longer exists, the at least one memory further includes computer program instructions which, when executed by the at least one processor, cause the apparatus to at least: determine that a distance between the first vehicle and the second vehicle is greater than the first threshold distance.

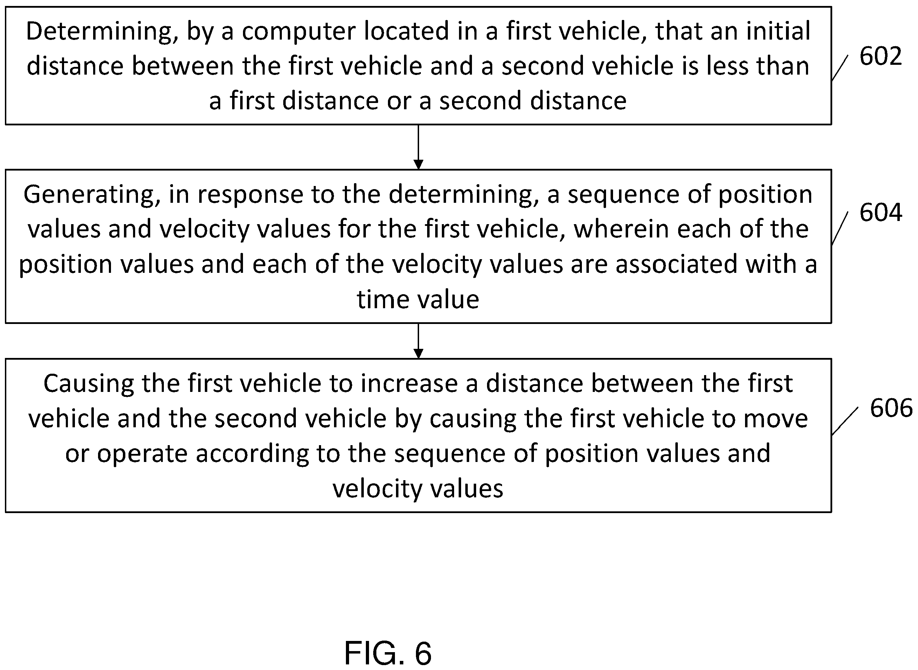

FIG. 6 shows an example flowchart of operating a vehicle. Operation 602 includes determining, by a computer located in a first vehicle, that an initial distance between the first vehicle and a second vehicle is less than a first distance or a second distance, where the second vehicle is located in a same lane as and in front of the first vehicle. Operation 604 includes generating in response to the determining, a sequence of position values and velocity values for the first vehicle, wherein each of the position values and each of the velocity values are associated with a time value. Operation 606 includes causing the first vehicle to increase a distance between the first vehicle and the second vehicle by causing the first vehicle to move or operate according to the sequence of position values and velocity values.

In some embodiments, the generating the sequence of position values and velocity values is performed using a constraint on the distance between the first vehicle and the second vehicle. In some embodiments, in response to the initial distance between the first vehicle and the second vehicle being greater than the first distance and less than the second distance, the constraint on the distance is that a first position value that indicates a position of the first vehicle at a time is less than a second position value that indicates a position of the second vehicle at the time minus the first distance. In some embodiments, in response to the initial distance between the first vehicle and the second vehicle being greater than the first distance and the second distance, the constraint on the distance is that a first position value that indicates a position of the first vehicle at a time is less than a minimum distance. In some embodiments, the minimum distance is determined based on Pontryagin's Maximum Principle.

In some embodiments, in response to the initial distance between the first vehicle and the second vehicle being less than the first distance, the distance between the first vehicle and the second vehicle is increased to be greater than the first distance within a determined period of time. In some embodiments, the determined period of time is a function of the first distance, a first position value that indicates a position of the first vehicle, a second position value that indicates a position of the second vehicle, and a relative speed that indicates a first speed of the first vehicle relative to a second speed of the second vehicle. In some embodiments, the first distance is determined as a function of: a first speed of the first vehicle, a second speed of the second vehicle, a first maximum acceleration or deceleration value of the first vehicle in response to brakes being applied by the first vehicle, a second maximum acceleration or deceleration value of the second vehicle in response to brakes being applied by the second vehicle, and a pre-determined distance value.

In some embodiments, the first distance is a maximum of a pre-determined distance value or a value obtained as a function of: a first speed of the first vehicle, a second speed of the second vehicle, a first maximum acceleration or deceleration value of the first vehicle in response to brakes being applied by the first vehicle, and a second maximum acceleration or deceleration value of the second vehicle in response to brakes being applied by the second vehicle. In some embodiments, the first distance is a minimum distance allowed between the first vehicle and the second vehicle. In some embodiments, the second distance is based on a first speed of the first vehicle. In some embodiments, during a period of time when the first vehicle is caused to increases the distance between the first vehicle and the second value, an acceleration of the first vehicle is a function of: a first position and a first velocity of the first vehicle, a value of the period of time, a second position of the second vehicle, and the first distance. In some embodiments, the first distance is less than the second distance.

In some embodiments, the cause the first vehicle to move according to the sequence of velocity values causes a convergence of a speed of the first vehicle to a reference speed. In some embodiments, the method further comprises determining a speed limit profile that describes speed limit values along a road on which the first vehicle is operating; determining a position where the first vehicle is to decelerate upon determining that a first speed limit value a first position is higher than a second speed value at a second position, wherein the second position on the road is later in time than the first position on the road; and causing the first vehicle to decelerate at the position. In some embodiments, during a time period when the first vehicle decelerates, a maximum allowed speed for the first vehicle decreases to the second speed value. In some embodiments, method stored in the transitory, or non-transitory, computer readable program storage medium further comprises changing the maximum allowed speed for the first vehicle to the first speed limit value upon determining that a part of the road after the second position is associated with the first speed limit value. In some embodiments, in response to the initial distance between the first vehicle and the second vehicle being less than the first distance, the distance between the first vehicle and the second vehicle is increased to be greater than the first distance.

Implementations of the subject matter and the functional operations described in this patent document can be implemented in various systems, semiconductor devices, ultrasonic devices, digital electronic circuitry, or in computer software, firmware, or hardware, including the structures disclosed in this specification and their structural equivalents, or in combinations of one or more of them. Implementations of aspects of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. Alternatively, the computer readable medium may be transitory. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices. The processor and the memory can be supplemented by, or incorporated in, special purpose logic circuitry.

In this disclosure, LiDAR or LIDAR are used to refer to light detection and ranging devices and methods, and alternatively, or additionally, laser detection and ranging devices and methods. The use of these acronyms does not imply limitation of the described devices, systems, or methods to the use of one over the other.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

## Claims

1. A method of operating a vehicle, comprising:

   determining, by a computer located in a first vehicle, that an initial distance between the first vehicle and a second vehicle is less than a first distance or a second distance,
   wherein the second vehicle is located in a same lane as and in front of the first vehicle;
   generating, in response to the determining, a sequence of position values and velocity values for the first vehicle, wherein each of the position values and each of the velocity values are associated with a time value; and
   causing the first vehicle to increase a distance between the first vehicle and the second vehicle by causing the first vehicle to move or operate according to the sequence of position values and velocity values.

2. The method of claim 1, wherein the generating the sequence of position values and velocity values is performed using a constraint on the distance between the first vehicle and the second vehicle, and wherein in response to the initial distance between the first vehicle and the second vehicle being greater than the first distance and less than the second distance, the constraint on the distance is that a first position value that indicates a position of the first vehicle at a time is less than a second position value that indicates a position of the second vehicle at the time minus the first distance.

3. The method of claim 1 or 2, wherein in response to the initial distance between the first vehicle and the second vehicle being greater than the first distance and the second distance, the constraint on the distance is that a first position value that indicates a position of the first vehicle at a time is less than a minimum distance, and wherein the minimum distance is determined based on Pontryagin's Maximum Principle.

4. The method of claim 1 or 2, wherein in response to the initial distance between the first vehicle and the second vehicle being less than the first distance, the distance between the first vehicle and the second vehicle is increased to be greater than the first distance within a determined period of time.

5. The method of claim 4, wherein the determined period of time is a function of the first distance, a first position value that indicates a position of the first vehicle, a second position value that indicates a position of the second vehicle, and a relative speed that indicates a first speed of the first vehicle relative to a second speed of the second vehicle.

6. An apparatus comprised in a first vehicle, the apparatus comprising:

   at least one processor; and
   at least one memory including computer program instructions which, when executed by the at least one processor, cause the apparatus to at least:

      determine that an initial distance between the first vehicle and a second vehicle is less than a first distance or a second distance,
      wherein the second vehicle is located in a same lane as and in front of the first vehicle;
      generate, in response to the determine, a sequence of position values and velocity values for the first vehicle, wherein each of the position values and each of the velocity values are associated with a time value; and
      cause the first vehicle to increase a distance between the first vehicle and the second vehicle by causing the first vehicle to move or operate according to the sequence of position values and velocity values.

7. The apparatus of claim 6, wherein the first distance is determined as a function of:

   a first speed of the first vehicle,
   a second speed of the second vehicle,
   a first maximum acceleration or deceleration value of the first vehicle in response to brakes being applied by the first vehicle,
   a second maximum acceleration or deceleration value of the second vehicle in response to brakes being applied by the second vehicle, and
   a pre-determined distance value.

8. The apparatus of claim 6, wherein the first distance is a maximum of a pre-determined distance value or a value obtained as a function of:

   a first speed of the first vehicle,
   a second speed of the second vehicle,
   a first maximum acceleration or deceleration value of the first vehicle in response to brakes being applied by the first vehicle, and
   a second maximum acceleration or deceleration value of the second vehicle in response to brakes being applied by the second vehicle.

9. The apparatus of any of claims 6 to 8, wherein the second distance is based on a first speed of the first vehicle.

10. The apparatus of any of claims 6 to 9, wherein, during a period of time when the first vehicle is caused to increase the distance between the first vehicle and the second vehicle, an acceleration of the first vehicle is a function of:

    a first position and a first velocity of the first vehicle,
    a value of the period of time,
    a second position of the second vehicle, and
    the first distance.

11. The apparatus of any of claims 6 to 10, wherein to cause the first vehicle to move according to the sequence of velocity values, the apparatus is further configured to cause a convergence of a speed of the first vehicle to a reference speed.

12. A computer readable program storage medium having code stored thereon, the code, when executed by a processor, causing the processor to implement a method, comprising: determining, by a computer located in a first vehicle, that an initial distance between the first vehicle and a second vehicle is less than a first distance or a second distance, wherein the second vehicle is located in a same lane as and in front of the first vehicle;

generating, in response to the determining, a sequence of position values and velocity values for the first vehicle, wherein each of the position values and each of the velocity values are associated with a time value; and causing the first vehicle to increase a distance between the first vehicle and the second vehicle by causing the first vehicle to move or operate according to the sequence of position values and velocity values.

13. The computer readable program storage medium of claim 12, wherein the method further comprises:

determining a speed limit profile that describes speed limit values along a road on which the first vehicle is operating;
determining a position where the first vehicle is to decelerate upon determining that a first speed limit value at a first position is higher than a second speed value at a second position, wherein the second position on the road is later in time than the first position on the road; and
causing the first vehicle to decelerate at the position.

14. A computer program including instructions for performing a method according to any of claims 1 to 5, when run on a data processing system.

15. A computer-readable medium including the computer program of claim 14.

FIG. 1

EP 4 173 915 A1

FIG. 2

FIG. 3

EP 4 173 915 A1

FIG. 4

**FIG. 5**

EP 4 173 915 A1

Determining, by a computer located in a first vehicle, that an initial distance between the first vehicle and a second vehicle is less than a first distance or a second distance /602

Generating, in response to the determining, a sequence of position values and velocity values for the first vehicle, wherein each of the position values and each of the velocity values are associated with a time value /604

Causing the first vehicle to increase a distance between the first vehicle and the second vehicle by causing the first vehicle to move or operate according to the sequence of position values and velocity values /606

FIG. 6

Europäisches
Patentamt
European
Patent Office
Office européen
des brevets

**EUROPEAN SEARCH REPORT**

Application Number

EP 22 20 2261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/179143 A1 (SHIN KI CHEOL [KR] ET AL) 17 June 2021 (2021-06-17)<br>* figures 1, 2B, 3A, 4, 6A-6C, 7 *<br>* paragraphs [0038], [0049], [0050], [0064], [0066], [0098], [0099] *<br>* the whole document * | 1-15 | INV.<br>B60W30/16<br>B60W30/095<br>B60W60/00<br>B60W30/18 |
| X | WO 2020/161512 A1 (NISSAN MOTOR [JP]; RENAULT SAS [FR])<br>13 August 2020 (2020-08-13)<br>* the whole document *<br>& EP 3 925 845 A1 (NISSAN MOTOR [JP]; RENAULT SAS [FR])<br>22 December 2021 (2021-12-22)<br>* figures 1-8 *<br>* paragraphs [0043], [0061] *<br>* the whole document * | 1,6,12,14,15 | ADD.<br>B60W50/00 |
| A | EP 3 699 053 A1 (BAIDU ONLINE NETWORK TECHNOLOGY BEIJING CO LTD [CN])<br>26 August 2020 (2020-08-26)<br>* figures 1-8 *<br>* the whole document * | 1,6,12,14,15 | TECHNICAL FIELDS SEARCHED (IPC)<br><br>B60W |

The present search report has been drawn up for all claims

| Place of search | Date of completion of the search | Examiner |
|---|---|---|
| Munich | 9 February 2023 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 2261

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | Publication date | Patent family member(s) | | Publication date |
|---|---|---|---|---|---|
| US 2021179143 | A1 | 17-06-2021 | CN | 112977435 A | 18-06-2021 |
| | | | KR | 20210077869 A | 28-06-2021 |
| | | | US | 2021179143 A1 | 17-06-2021 |
| WO 2020161512 | A1 | 13-08-2020 | CN | 113412212 A | 17-09-2021 |
| | | | EP | 3925845 A1 | 22-12-2021 |
| | | | JP | WO2020161512 A1 | 13-08-2020 |
| | | | RU | 2770230 C1 | 14-04-2022 |
| | | | US | 2022105929 A1 | 07-04-2022 |
| | | | WO | 2020161512 A1 | 13-08-2020 |
| EP 3699053 | A1 | 26-08-2020 | CN | 109712421 A | 03-05-2019 |
| | | | EP | 3699053 A1 | 26-08-2020 |
| | | | JP | 7000640 B2 | 19-01-2022 |
| | | | JP | 2020132149 A | 31-08-2020 |
| | | | KR | 20200103541 A | 02-09-2020 |
| | | | KR | 20210144635 A | 30-11-2021 |
| | | | US | 2020269873 A1 | 27-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63263077